# EUROPEAN PATENT SPECIFICATION

(11) **EP 2 805 060 B1**
(45) Date of publication and mention of the grant of the patent: **21.09.2016**
(21) Application number: 12813422.8
(22) Date of filing: 12.12.2012
(51) Int. Cl.: F04D 29/16, F04D 29/42, F04D 29/66

(54) **A FAN**
LÜFTER
VENTILATEUR

(30) Priority: 19.01.2012 GB 201200899
(43) Date of publication of application: 26.11.2014
(73) Proprietor: Dyson Technology Limited, Malmesbury, Wiltshire SN16 0RP (GB)
(72) Inventor: ATKINSON, Antoine, Malmesbury Wiltshire SN16 0RP (GB)
(74) Representative: Booth, Andrew Steven
(86) International application number: PCT/GB2012/053100
(87) International publication number: WO 2013/107999

(56) References cited:
- EP-A2- 1 566 548
- WO-A1-2009/030879
- WO-A1-2010/100452
- DE-A1- 19 712 228
- DE-A1-102009 044 349

## Description

### FIELD OF THE INVENTION

The present invention relates to a fan as defined in the preamble of claim 1. Such a fan is known eg from DE 10 2009 044349. Particularly, but not exclusively, the present invention relates to a floor or table-top fan, such as a desk, tower or pedestal fan.

### BACKGROUND OF THE INVENTION

A conventional domestic fan typically includes a set of blades or vanes mounted for rotation about an axis, and drive apparatus for rotating the set of blades to generate an air flow. The movement and circulation of the air flow creates a 'wind chill' or breeze and, as a result, the user experiences a cooling effect as heat is dissipated through convection and evaporation. The blades are generated located within a cage which allows an air flow to pass through the housing while preventing users from coming into contact with the rotating blades during use of the fan.

WO 2009/030879 describes a fan assembly which does not use caged blades to project air from the fan assembly. Instead, the fan assembly comprises a cylindrical base which houses a motor-driven impeller for drawing a primary air flow into the base, and an annular nozzle connected to the base and comprising an annular air outlet through which the primary air flow is emitted from the fan. The nozzle defines a central opening through which air in the local environment of the fan assembly is drawn by the primary air flow emitted from the mouth, amplifying the primary air flow.

WO 2010/100452 also describes such a fan assembly. Within the base, the impeller is located within an impeller housing, and the motor for driving the impeller is located within a motor bucket which is mounted on the impeller housing. The impeller housing is supported within the base by a plurality of angularly spaced supports. Each support is, in turn, mounted on a respective support surface extending radially inwardly from the inner surface of the base. In order to provide an air tight seal between the impeller housing and the base, a lip seal is located on an external side surface of the impeller housing for engaging the internal side surface of the base.

DE 10 2009 044349 A1 discloses a fan comprising a fan housing, and a frame structure radially surrounding the fan housing. A membrane flexibly interconnects the fan housing and the frame structure.

DE 197 12 228 A1 discloses a demountable fixing for a vehicle fan motor. The electric motor for the blower of the heating or air conditioning system of a vehicle comprises a pot-shaped housing which also has a shaped flange to locate onto a mounting flange of the housing of the system. The motor housing is secured by three radial arms which are bolted to mounting posts on the system housing, spaced around the fitting site. The flange and mounting position have sloped thrust faces between which is clamped an elastic seal for vibration damping. Likewise the radial arms are secured to the mounting posts on elastic fittings.

### SUMMARY OF THE INVENTION

The present invention provides a fan as defined in claim 1.

The fan assembly thus comprises both an annular seal and at least one resilient support located between the impeller housing and a seat upon which the impeller housing is mounted. The compression of the annular seal between the impeller housing and the seat forms an air tight seal which prevents air from leaking back towards the air inlet of the casing along a path extending between the casing and the impeller housing, and so forces the pressurized air flow generated by the impeller to pass to the air outlet of the casing.

The annular seal is preferably a foam annular seal. Forming the annular seal from a foam material, as opposed to an elastomeric or rubber material, can reduce the transmission of vibrations to the casing through the annular seal. The resilient support(s) are also disposed between the impeller housing and the seat so as to bear some of the combined weight of the impeller housing, impeller, motor housing and motor, and thereby reduce the compressive load acting on the annular seal. This reduces the extent of the deformation of the annular seal; an excessive compression of the annular seal between the impeller housing and the seat could result in an undesirable increase in the transmission of the vibrations from the motor housing to the casing through the annular seal.

The compressive force acting on the annular seal is preferably aligned with the direction of the greatest stiffness of the surface from which the vibrations are to be isolated, that is, the casing of the fan. In a preferred embodiment, this direction is parallel to the longitudinal axis of the casing. The annular seal is preferably spaced from the inner surface of the casing so that vibrations are not transferred radially outwardly from the annular seal to the casing.

In addition to forming an air-tight seal between the impeller housing and the casing, the annular seal can also provide a damping action for reducing the vibration of the resilient support(s) during use of the fan assembly, and so reduce the transmission of the vibrations from the motor housing to the casing through the resilient support(s).

The annular seal is preferably formed from material which exhibits no more than 0.01 MPa of stress at 10% compression. In a preferred embodiment, the annular seal is formed from a closed cell foam material. The foam material is preferably formed from a synthetic rubber, such as EPDM (ethylene propylene diene monomer) rubber.

The impeller housing may be provided with a recessed section defining an annular channel for receiving the seal. The recessed section of the impeller housing preferably comprises a seal engaging surface, for example a flange, which extends radially outwardly from the impeller housing and generally parallel to the seat, and which is in sealing engagement with the seal.

The fan may comprise means for inhibiting rotation of the seal relative to the impeller housing. External peripheries of both the recessed section of the impeller housing and the seal may be non-circular or otherwise shaped to inhibit rotation of the seal within the annular channel. For example, the external peripheries of both the recessed section of the impeller housing and the seal may be scalloped. Alternatively, or additionally, the seat may comprise means for inhibiting rotation of the seal relative to the impeller housing.

The resilient support(s) preferably extend about the annular seal. The fan may comprise a single, annular resilient support. Alternatively, the fan may comprise a plurality of resilient supports. The resilient supports are preferably angularly spaced about the impeller housing. To reduce the width of the casing, the internal or external periphery of the annular seal may be scalloped or otherwise profiled to form a plurality of recesses each for at least partially accommodating a respective resilient support. Alternatively, the annular seal may be provided with a plurality of apertures, with each resilient support extending through a respective aperture.

The, or each resilient support may comprise a respective spring. Alternatively, each resilient support may be formed from an elastomeric material. For example, a single annular resilient support may be provided in the form of a bellows support arranged about the impeller housing. Where the fan comprises a plurality of resilient supports, each support may comprise a rod or shaft formed from rubber or other resilient or elastomeric material.

The fan preferably comprises means for inhibiting angular movement of the impeller housing, that is, about the rotational axis of the impeller, relative to the seat. For example, the fan may comprise means for inhibiting angular movement of the resilient support(s) relative to the seat. The seat may be provided with one or more stop members for engaging the resilient support(s) to prevent movement of the resilient support(s) along the seat. The stop members may be in the form of raised or recessed portions of the seat. The fan may also comprise means for inhibiting angular movement of the resilient support(s) relative to the impeller housing. For example, the impeller housing may comprise one or more stop members for engaging the resilient support(s) to prevent movement of the resilient support(s) along the impeller housing. Where the fan comprises a plurality of resilient supports, the impeller housing may comprise a plurality of mounts each connected to a respective resilient support.

The seat may be connected to an upper end of a base of the fan so as to be located within the casing. However, the seat is preferably connected to the casing. The seat preferably extends radially inwardly from a side wall of the casing.

### BRIEF DESCRIPTION OF THE DRAWINGS

Preferred features of the invention will now be described, by way of example only, with reference to the accompanying drawings, in which:
Figure 1 is a front view of a fan;
Figure 2 is a front perspective view, from above, of the air outlet of the fan;
Figure 3 is a side sectional view of the body of the fan;
Figure 4 is an exploded view, from below, of an impeller housing, an annular seal and resilient supports of the lower part of the fan; and
Figure 5 is an exploded view, from above, of the same components of the fan as illustrated in Figure 4, and a lower part of the main body section of the body of the casing.

### DETAILED DESCRIPTION OF THE INVENTION

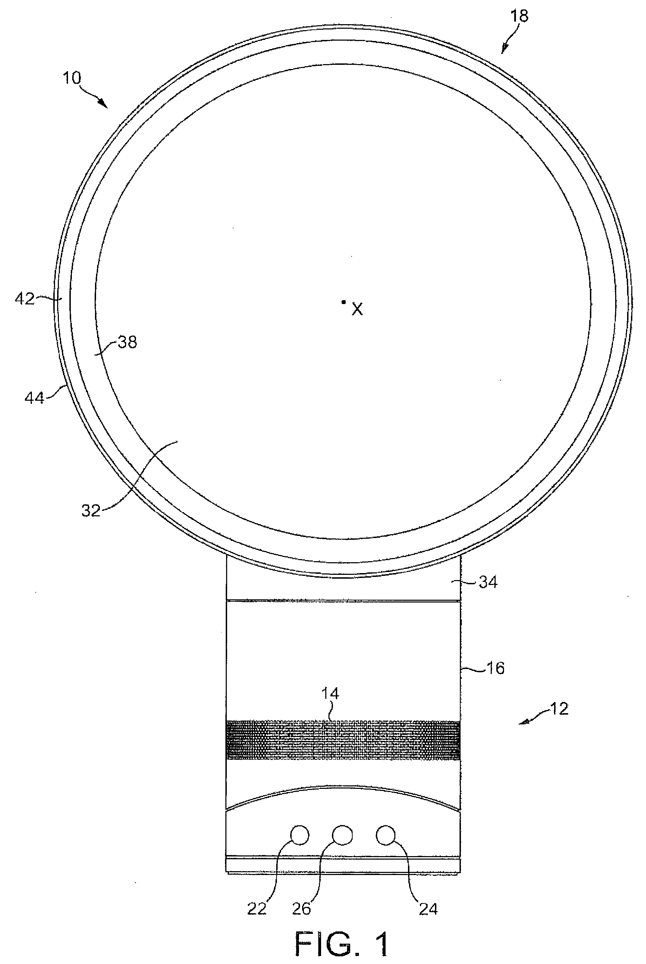

Figure 1 is a front view of a fan 10. The fan comprises a body 12 having an air inlet 14 in the form of a plurality of apertures formed in the outer casing 16 of the body 12, and through which a primary air flow is drawn into the body 12 from the external environment. An annular nozzle 18 having an air outlet 20 for emitting the primary air flow from the fan 10 is connected to the body 12. The body 12 further comprises a user interface for allowing a user to control the operation of the fan 10. The user interface comprises a plurality of user-operable buttons 22, 24 and a user-operable dial 26.

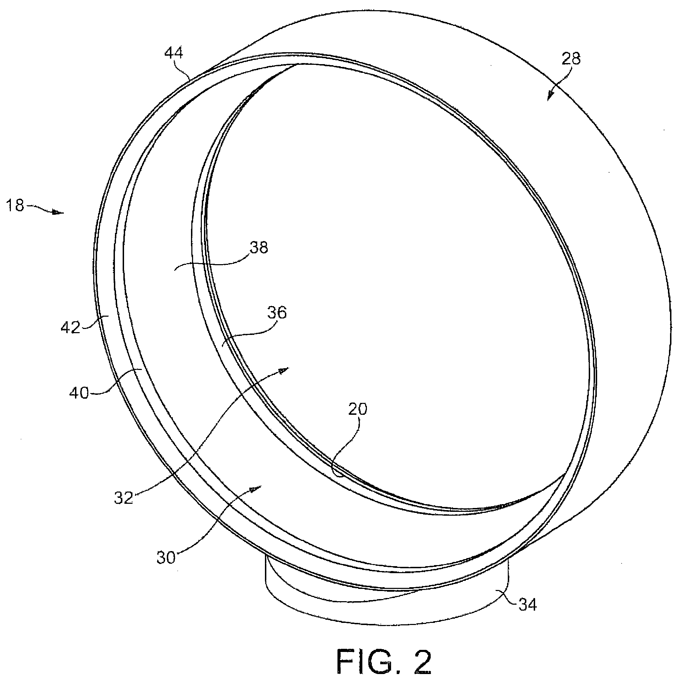

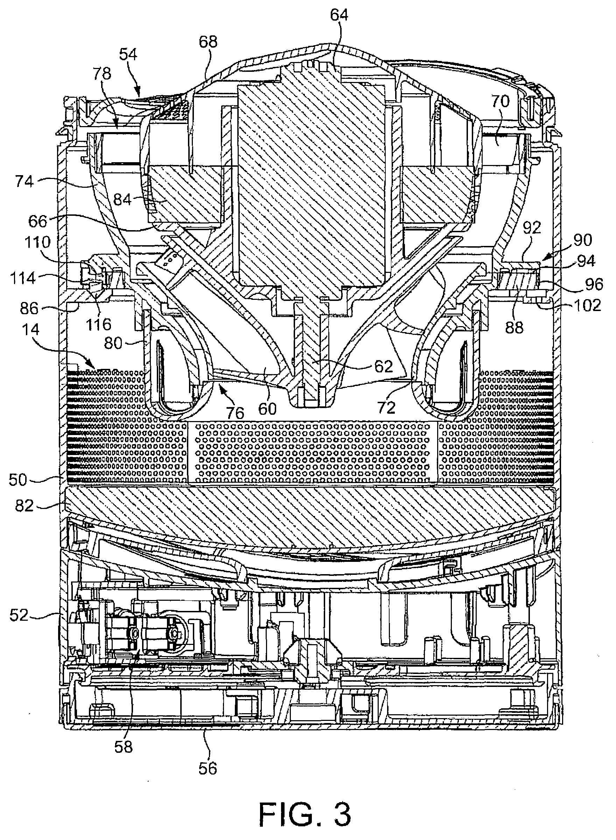

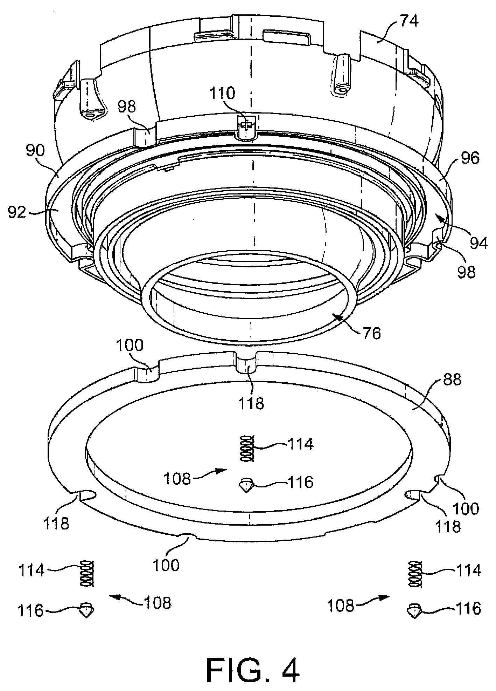

As also shown in Figure 2, the nozzle 18 comprises an annular outer casing section 28 connected to and extending about an annular inner casing section 30. The annular sections 28, 30 of the nozzle 18 extend about and define an opening 32. Each of these sections may be formed from a plurality of connected parts, but in this embodiment each of the outer casing section 28 and the inner casing section 30 is formed from a respective, single moulded part. During assembly, the outer casing section 28 is inserted into a slot located at the front of the inner casing section 30, as illustrated in Figures 3 and 4. The outer and inner casing sections 28, 30 may be connected together using an adhesive introduced to the slot. The outer casing section 28 comprises a base 34 which is connected to the open upper end of the outer casing 16 of the body 12, and which has an open lower end for receiving the primary air flow from the body 12.

The outer casing section 28 and the inner casing section 30 together define an annular interior passage for conveying the primary air flow to the air outlet 20. The interior passage is bounded by the internal surface of the outer casing section 28 and the internal surface of the inner casing section 30. The base 34 of the outer casing section 28 is shaped to convey the primary air flow into the interior passage of the nozzle 18.

The air outlet 20 is located towards the rear of the nozzle 18, and is arranged to emit the primary air flow towards the front of the fan 10, through the opening 32. The air outlet 20 extends at least partially about the opening 32, and preferably surrounds the opening 32. The air outlet 20 is defined by overlapping, or facing, portions of the internal surface of the outer casing section 28 and the external surface of the inner casing section 30, respectively, and is in the form of an annular slot, preferably having a relatively constant width in the range from 0.5 to 5 mm. In this example the air outlet has a width of around 1 mm. Spacers may be spaced about the air outlet 20 for urging apart the overlapping portions of the outer casing section 28 and the inner casing section 30 to maintain the width of the air outlet 20 at the desired level. These spacers may be integral with either the outer casing section 28 or the inner casing section 30.

The air outlet 20 is shaped to direct the primary air flow over the external surface of the inner casing section 30. The external surface of the inner casing section 30 comprises a Coanda surface 36 located adjacent the air outlet 20 and over which the air outlet 20 directs the air emitted from the fan 10, a diffuser surface 38 located downstream of the Coanda surface 36 and a guide surface 40 located downstream of the diffuser surface 38. The diffuser surface 38 is arranged to taper away from the central axis X of the opening 32 in such a way so as to assist the flow of air emitted from the fan 10. The angle subtended between the diffuser surface 38 and the central axis X of the opening 32 is in the range from 5 to 25°, and in this example is around 15°. The guide surface 40 is arranged at an angle to the diffuser surface 38 to further assist the efficient delivery of a cooling air flow from the fan 10. The guide surface 40 is preferably arranged substantially parallel to the central axis X of the opening 32 to present a substantially flat and substantially smooth face to the air flow emitted from the air outlet 20. A visually appealing tapered surface 42 is located downstream from the guide surface 40, terminating at a tip surface 44 lying substantially perpendicular to the central axis X of the opening 32. The angle subtended between the tapered surface 42 and the central axis X of the opening 32 is preferably around 45°.

Figure 3 illustrates a side sectional view through the body 12 of the fan 10. The body 12 comprises a substantially cylindrical main body section 50 mounted on a substantially cylindrical lower body section 52. The main body section 50 and the lower body section 52 are preferably formed from plastics material. The main body section 50 and the lower body section 52 preferably have substantially the same external diameter so that the external surface of the main body section 50 is substantially flush with the external surface of the lower body section 52.

The main body section 50 comprises the air inlet 14 through which the primary air flow enters the fan assembly 10. In this embodiment the air inlet 14 comprises an array of apertures formed in the main body section 50. Alternatively, the air inlet 14 may comprise one or more grilles or meshes mounted within windows formed in the main body section 50. The main body section 50 is open at the upper end (as illustrated) thereof to provide an air outlet 54 through which the primary air flow is exhausted from the body 12 to the nozzle 18.

The main body section 50 may be tilted relative to the lower body section 52 to adjust the direction in which the primary air flow is emitted from the fan assembly 10. For example, the upper surface of the lower body section 52 and the lower surface of the main body section 50 may be provided with interconnecting features which allow the main body section 50 to move relative to the lower body section 52 while preventing the main body section 50 from being lifted from the lower body section 52. For example, the lower body section 52 and the main body section 50 may comprise interlocking L-shaped members.

The lower body section 52 is mounted on a base 56 for engaging a surface on which the fan assembly 10 is located. The lower body section 52 comprises the aforementioned user interface and a control circuit, indicated generally at 58, for controlling various functions of the fan 10 in response to operation of the user interface. The lower body section 52 also houses a mechanism for oscillating the lower body section 52 relative to the base 56. The operation of the oscillation mechanism is controlled by the control circuit 58 in response to the user's depression of the button 24 of the user interface. The range of each oscillation cycle of the lower body section 52 relative to the base 56 is preferably between 60° and 120°, and the oscillation mechanism is arranged to perform around 3 to 5 oscillation cycles per minute. A mains power cable (not shown) for supplying electrical power to the fan 10 extends through an aperture formed in the base 56.

The main body section 50 houses an impeller 60 for drawing the primary air flow through the air inlet 14 and into the body 12. The impeller 60 is connected to a rotary shaft 62 extending outwardly from a motor 64. In this embodiment, the motor 64 is a DC brushless motor having a speed which is variable by the control circuit 58 in response to user manipulation of the dial 26. The maximum speed of the motor 64 is preferably in the range from 5,000 to 10,000 rpm.

The motor 64 is housed within a motor housing. The motor housing comprises a lower section 66 which supports the motor 64, and an upper section 68 connected to the lower section 66. The shaft 62 protrudes through an aperture formed in the lower section 66 of the motor housing to allow the impeller to be connected to the shaft 62. The motor 64 is inserted into the lower section 66 of the motor housing before the upper section 68 is connected to the lower section 66. The upper section 68 comprises an annular diffuser 70 having a plurality of blades for receiving the primary air flow exhausted from the impeller 64 and for guiding the air flow to the air outlet 54 of the main body section 50. A shroud 72 is connected to the outer edges of the blades of the impeller 60.

The motor housing is supported within the main body section 50 by an impeller housing 74. The impeller housing 74 is generally frusto-conical in shape, and comprises an air inlet 76 at the relatively small, outwardly flared lower end thereof (as illustrated) for receiving the primary air flow, and an air outlet 78 at the relatively large, upper end thereof (as illustrated) which is located immediately upstream from the diffuser 72 when the motor housing is supported within the impeller housing 74. The impeller 60, the shroud 72 and the impeller housing 74 are shaped so that when the impeller 60 is supported by the impeller housing 74, the shroud 72 is in close proximity to, but does not contact, the inner surface of the impeller housing 74, and the impeller 60 is substantially co-axial with the impeller housing 74.

An annular inlet member 80 guides an air flow from the air inlet 14 of the outer casing 16 to the air inlet 76 of the impeller housing 74. A disc-shaped foam silencing member 82 is located within the main body section 50, beneath the air inlet 76 of the impeller housing 74. An annular foam silencing member 84 is located within the motor housing.

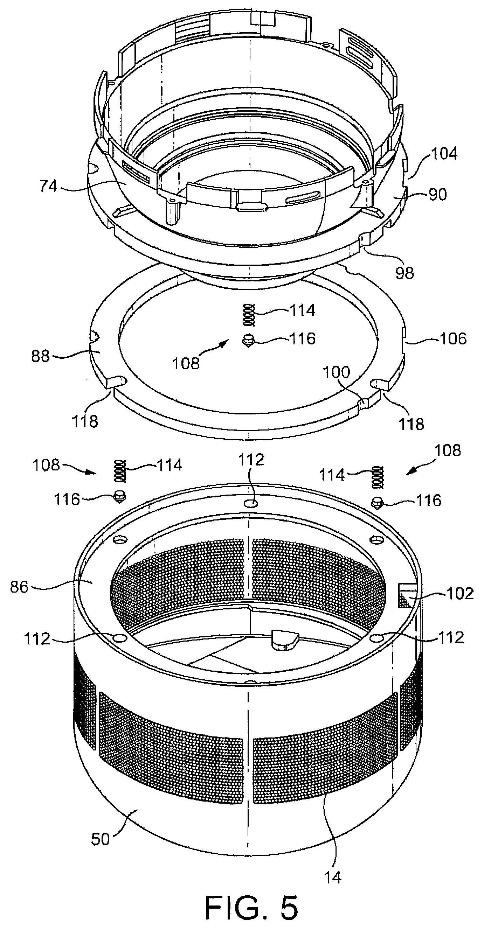

With reference also to Figures 4 and 5, the impeller housing 74 is located within the main body section 50 so that the rotational axis of the impeller 60 is substantially co-linear with the longitudinal axis of the main body section 50. The impeller housing 74 is mounted on an annular seat 86 located within the main body section 50. The seat 86 extends radially inwardly from the inner surface of the main body section 50 so that an upper surface of the seat 86 is substantially orthogonal to the rotational axis of the impeller 60.

An annular seal 88 is located between the impeller housing 74 and the seat 86. The annular seal 88 is preferably a foam annular seal, and is preferably formed from a closed cell foam material. In this example, the annular seal 88 is formed from EPDM (ethylene propylene diene monomer) rubber, but the annular seal 88 may be formed from other closed cell foam material which preferably exhibits no more than 0.01 MPa of stress at 10% compression. The outer diameter of the annular seal 88 is preferably smaller than the inner diameter of the main body section 50, so that the annular seal 88 is spaced from the inner surface of the main body section 50.

The annular seal 88 has a lower surface which is in sealing engagement with the upper surface of the seat 86, and an upper surface which is in sealing engagement with the impeller housing 74. In this example, the impeller housing 74 comprises a recessed seal engaging section 90 extending about an outer wall of the impeller housing. The seal engaging section 90 of the impeller housing 74 comprises a flange 92 which defines an annular channel 94 for receiving the annular seal 88. The flange 92 extends radially outwardly from the outer surface of the impeller housing 74 so that a lower surface of the flange 92 is substantially orthogonal to the rotational axis of the impeller 60. The internal periphery of a circumferential lip 96 of the flange 92 and the external periphery of the annular seal 88 are preferably scalloped or otherwise shaped to define a plurality of recesses 98, 100 to inhibit relative rotation between the impeller housing 74 and the annular seal 88.

The seat 86 comprises an aperture 102 to enable a cable (not shown) to pass from the control circuit 58 to the motor 64. Each of the flange 92 of the impeller housing 74 and the annular seal 88 is shaped to define a respective recess 104, 106 to accommodate part of the cable. One or more grommets or other sealing members may be provided about the cable to inhibit the leakage of air through the aperture 102, and between the recesses 104, 106 and the internal surface of the main body section 50.

A plurality of resilient supports 108 are also provided between the impeller housing 74 and the seat 86 for bearing part of the weight of the motor 64, motor housing, impeller 60 and impeller housing 74. The resilient supports 108 are equally spaced from, and equally spaced about, the longitudinal axis of the main body section 50. Each resilient support 108 has a first end which is connected to a respective mount 110 located on the flange 92 of the impeller housing 74, and a second end which is received within a recess 112 formed in the seat 86 to inhibit movement of the resilient support 108 along the seat 86 and about the longitudinal axis of the main body section 50. In this example, each resilient support 108 comprises a spring 114 which is located over a respective mount 110, and a rubber foot 116 which is located with a respective recess 112. Alternatively, the spring 114 and the foot 116 may be replaced by a rod or shaft formed from rubber or other elastic or elastomeric material. As a further alternative, the plurality of resilient supports 108 may be replaced by a single annular resilient support extending about the annular seal 88. In this example, the external periphery of the annular seal 88 is further scalloped or otherwise shaped to form a plurality of recesses 118 each for at least partially receiving a respective resilient support 88. This allows the resilient supports 88 to be located closer to the longitudinal axis of the main body section 50 without either decreasing the radial thickness of the annular seal 80 or increasing the diameter of the main body section 50.

To operate the fan 10 the user presses button 22 of the user interface, in response to which the control circuit 58 activates the motor 64 to rotate the impeller 60. The rotation of the impeller 60 causes a primary air flow to be drawn into the body 12 through the air inlet 14. The user may control the speed of the motor 64, and therefore the rate at which air is drawn into the body 12 through the air inlet 14, by manipulating the dial 26. Depending on the speed of the motor 64, the primary air flow generated by the impeller 60 may be between 20 and 30 litres per second.

The rotation of the impeller 60 by the motor 64 generates vibrations which are transferred through the motor housing and the impeller housing 74 towards the seat 86. The annular seal 88 located between the impeller housing 74 and the seat 86 is compressed under the weight of the motor housing, motor 64, impeller 60 and impeller housing 74 so that it is in sealing engagement with the upper surface of the seat 86 and the lower surface of the flange 92 of the impeller housing 74. The annular seal 88 thus not only prevents the primary air flow from returning to the air inlet 76 of the impeller housing 74 along a path extending between the inner surface of the main body section 50 and the outer surface of the impeller housing 74, but also reduces the transmission of these vibrations to the seat 86, and thus to the body 12 of the fan 10. The presence of the resilient supports 108 between the impeller housing 74 and the seat 86 inhibits any over-compression of the annular seal 88 over time, which otherwise could increase the transmission of vibrations through the annular seal 88 to the seat 86. The flexibility of the resilient supports 108 allows the resilient supports to flex both axially and radially relative to the seat 86, which reduces the transmission of vibrations to the seat 86 through the resilient supports 88. The annular seal 88 serves to damp the flexing movement of the resilient supports 108 relative to the seat 86.

The primary air flow passes sequentially between the impeller 60 and the impeller housing 74, and through the diffuser 72, before passing through the air outlet 54 of the body 12 and into the nozzle 18. Within the nozzle 18, the primary air flow is divided into two air streams which pass in opposite directions around the opening 32 of the nozzle 18. As the air streams pass through the nozzle 18, air is emitted through the air outlet 20. The primary air flow emitted from the air outlet 20 is directed over the Coanda surface 36 of the nozzle 18, causing a secondary air flow to be generated by the entrainment of air from the external environment, specifically from the region around the air outlet 20 and from around the rear of the nozzle 18. This secondary air flow passes through the central opening 32 of the nozzle 18, where it combines with the primary air flow to produce a total air flow, or air current, projected forward from the nozzle 18.

## Claims

1. A fan (10) comprising:
a casing (16) having an air inlet (14) and an air outlet (20);
an impeller housing (74) located within the casing (16);
an impeller (60) located within the impeller housing (74) for generating an air flow along a path extending from the air inlet (14) to the air outlet (20) through the impeller housing (74);
a motor housing connected to the impeller housing (74);
a motor (64) located within the motor housing for driving the impeller (60);
an annular seal (88) in sealing engagement with the impeller housing (74) and an annular seat (86) located within the casing (16),
**characterised in that** the impeller housing (74) is mounted on the annular seat (86) and at least one resilient support (108) is located between the impeller housing (74) and the seat (86) for reducing the compressive load applied to the annular seal (88).

2. A fan (10) as claimed in claim 1, wherein the seat (86) is connected to the casing (16).

3. A fan (10) as claimed in claim 2, wherein the seat (86) extends radially inwardly from a side wall of the casing (16).

4. A fan (10) as claimed in any preceding claim, wherein the impeller housing (74) comprises a recessed section (90) defining an annular channel (94) for receiving the seal (88).

5. A fan (10) as claimed in claim 4, wherein the recessed section (90) comprises a seal engaging surface (92) extending radially outwardly from a side wall of the impeller housing (74) and parallel to the seat (86).

6. A fan (10) as claimed in any preceding claim, comprising means for inhibiting rotation of the seal (88) relative to the impeller housing (74).

7. A fan (10) as claimed in any preceding claim, comprising means for inhibiting angular movement of the impeller housing (74) relative to the seat (86).

8. A fan (10) as claimed in any preceding claim, wherein the at least one resilient support (108) comprises a plurality of resilient supports.

9. A fan (10) as claimed in claim 8, wherein the resilient supports (108) are angularly spaced about the impeller housing (74).

10. A fan (10) as claimed in claim 8 or claim 9, wherein a peripheral surface of the seal (88) is profiled so as to form a plurality of recesses (118) each for at least partially receiving a respective resilient support (108).

11. A fan (10) as claimed in any of claims 8 to 10, wherein the impeller housing (74) comprises a plurality of mounts (110) each connected to a respective resilient support (108).

12. A fan (10) as claimed in any of claims 8 to 11, wherein the annular seal (88) comprises a plurality of recesses (118) each for receiving a respective resilient support (108).

13. A fan (10) as claimed in any of claims 8 to 12, wherein each resilient support (108) comprises a respective spring.

14. A fan (10) as claimed in any preceding claim, wherein the annular seal (88) is a foam annular seal.

15. A fan (10) as claimed in any preceding claim, wherein the annular seal (88) is formed from a closed cell foam material.

16. A fan (10) as claimed in any preceding claim, wherein the annular seal (88) is spaced from an inner side surface of the casing (16).

## Patentansprüche

1. Ventilator (10), Folgendes umfassend:
ein Gehäuse (16) mit einem Lufteinlass (14) und einem Luftauslass (20);
ein Laufradgehäuse (74), das sich im Gehäuse (16) befindet;
ein Laufrad (60), das sich im Laufradgehäuse (74) befindet, zum Erzeugen eines Luftstroms entlang eines Pfads, der sich vom Lufteinlass (14) bis zum Luftauslass (20) durch das Laufradgehäuse (74) erstreckt;
ein Motorgehäuse, das mit dem Laufradgehäuse (74) verbunden ist;
ein Motor (64), der sich im Motorgehäuse befindet, für den Antrieb des Laufrads (60);
eine Ringdichtung (88), die sich in dichtendem Eingriff mit dem Laufradgehäuse (74) befindet, und ein ringförmiger Sitz (86), der sich innerhalb des Gehäuses (16) befindet,
**dadurch gekennzeichnet, dass** das Laufradgehäuse (74) auf dem ringförmigen Sitz (86) montiert ist und sich mindestens ein elastischer Träger (108) zwischen dem Laufradgehäuse (74) und dem Sitz (86) befindet, um die auf die Ringdichtung (88) einwirkende Drucklast zu verringern.

2. Ventilator (10) gemäß Anspruch 1, wobei der Sitz (86) mit dem Gehäuse (16) verbunden ist.

3. Ventilator (10) gemäß Anspruch 2, wobei sich der Sitz (86) von einer Seitenwand des Gehäuses aus radial nach innen erstreckt.

4. Ventilator (10) gemäß einem der vorherigen Ansprüche, wobei das Laufradgehäuse (74) einen vertieften Abschnitt (90) umfasst, der einen Ringkanal (94) für die Aufnahme der Dichtung (88) definiert.

5. Ventilator (10) gemäß Anspruch 4, wobei der vertiefte Abschnitt (90) eine mit der Dichtung zusammenwirkende Oberfläche (92) umfasst, die sich von einer Seitenwand des Laufradgehäuses (74) radial nach außen und parallel zum Sitz (86) erstreckt.

6. Ventilator (10) gemäß einem der vorherigen Ansprüche, umfassend Mittel zur Vermeidung der Rotation der Dichtung (88) bezogen auf das Laufradgehäuse (74).

7. Ventilator (10) gemäß einem der vorherigen Ansprüche, umfassend Mittel zur Vermeidung von Winkelbewegung des Laufradgehäuses (74) bezogen auf den Sitz (86).

8. Ventilator (10) gemäß einem der vorherigen Ansprüche, wobei der mindestens eine elastische Träger (108) eine Vielzahl elastischer Träger umfasst.

9. Ventilator (10) gemäß Anspruch 8, wobei die elastischen Träger (108) rund um das Laufradgehäuse (74) winkelmäßig beabstandet sind.

10. Ventilator (10) gemäß Anspruch 8 oder Anspruch 9, wobei eine Umfangsfläche der Dichtung (88) dergestalt profiliert ist, dass sie eine Vielzahl von Vertiefungen (118) formt, von denen jede einen entsprechenden elastischen Träger (108) zumindest teilweise aufnimmt.

11. Ventilator (10) gemäß einem der Ansprüche 8 bis 10, wobei das Laufradgehäuse (74) eine Vielzahl von Halterungen (110) umfasst, die jeweils mit einem entsprechenden elastischen Träger (108) verbunden sind.

12. Ventilator (10) gemäß einem der Ansprüche 8 bis 11, wobei die Ringdichtung (88) eine Vielzahl von Vertiefungen (118) umfasst, die jeweils einen entsprechenden elastischen Träger (108) aufnehmen.

13. Ventilator (10) gemäß einem der Ansprüche 8 bis 12, wobei jeder elastische Träger (108) eine entsprechende Feder umfasst.

14. Ventilator (10) gemäß einem der vorherigen Ansprüche, wobei die Ringdichtung (88) eine Schaumstoffringdichtung ist.

15. Ventilator (10) gemäß einem der vorherigen Ansprüche, wobei die Ringdichtung (88) aus einem geschlossenzelligen Schaumstoff hergestellt ist.

16. Ventilator (10) gemäß einem der vorherigen Ansprüche, wobei die Ringdichtung (88) von einer Innenfläche des Gehäuses (16) beabstandet ist.

## Revendications

1. Ventilateur (10) comprenant :
un carter (16) ayant une entrée d'air (14) et une sortie d'air (20) ;
un boîtier de turbine (74) se trouvant dans le carter (16) ;
une turbine (60) se trouvant dans le boîtier de turbine (74), et servant à produire un écoulement d'air le long d'une voie allant de l'entrée d'air (14) à la sortie d'air (20) en traversant le boîtier de turbine (74) ;
un carter de moteur relié au boîtier de turbine (74) ;
un moteur (64) se trouvant dans le carter de moteur et servant à entraîner la turbine (60) ;
un joint annulaire (88) en prise étanche avec le boîtier de turbine (74) et un siège annulaire (86) se trouvant dans le carter (16),
**caractérisé en ce que** le boîtier de turbine (74) est fixé sur le siège annulaire (86) et au moins un support souple (108) se trouve entre le boîtier de turbine (74) et le siège (86) afin de réduire la charge de compression appliquée sur le joint annulaire (88).

2. Ventilateur (10) selon la revendication 1, dans lequel le siège (86) est relié au carter (16).

3. Ventilateur (10) selon la revendication 2, dans lequel le siège (86) s'étend radialement vers l'intérieur depuis une paroi latérale du carter (16).

4. Ventilateur (10) selon l'une quelconque des revendications précédentes, dans lequel le boîtier de turbine (74) comprend une section renfoncée (90) définissant un canal annulaire (94) permettant d'accueillir le joint (88).

5. Ventilateur (10) selon la revendication 4, dans lequel la section renfoncée (90) comprend une surface de prise de joint (92) s'étendant radialement vers l'extérieur depuis une paroi latérale du boîtier de turbine (74) et parallèlement au siège (86).

6. Ventilateur (10) selon l'une quelconque des revendications précédentes, comprenant un dispositif de blocage de la rotation du joint (88) par rapport au boîtier de turbine (74).

7. Ventilateur (10) selon l'une quelconque des revendications précédentes, comprenant un dispositif de blocage du mouvement angulaire du boîtier de turbine (74) par rapport au siège (86).

8. Ventilateur (10) selon l'une quelconque des revendications précédentes, dans lequel l'au moins un support souple (108) comprend une pluralité de supports souples.

9. Ventilateur (10) selon la revendication 8, dans lequel les supports souples (108) sont espacés angulairement autour du boîtier de turbine (74).

10. Ventilateur (10) selon la revendication 8 ou 9, dans lequel une surface périphérique du joint (88) est profilée de sorte à former une pluralité de renfoncements (118) pouvant chacun au moins partiellement accueillir un support souple (108) respectif.

11. Ventilateur (10) selon l'une quelconque des revendications 8 à 10, dans lequel le boîtier de turbine (74) comprend une pluralité de saillies (110) chacune reliée à un support souple (108) respectif.

12. Ventilateur (10) selon l'une quelconque des revendications 8 à 11, dans lequel le joint annulaire (88) comprend une pluralité de renfoncements (118) pouvant chacun accueillir un support souple (108) respectif.

13. Ventilateur (10) selon l'une quelconque des revendications 8 à 12, dans lequel chaque support souple (108) comprend un ressort respectif.

14. Ventilateur (10) selon l'une quelconque des revendications précédentes, dans lequel le joint annulaire (88) est un joint annulaire en mousse.

15. Ventilateur (10) selon l'une quelconque des revendications précédentes, dans lequel le joint annulaire (88) est fabriqué en mousse à cellules fermées.

16. Ventilateur (10) selon l'une quelconque des revendications précédentes, dans lequel le joint annulaire (88) est espacé d'une surface latérale interne du carter (16).
